# EUROPEAN PATENT APPLICATION

(11) **EP 4 568 305 A1**
(43) Date of publication of application: **11.06.2025**
(21) Application number: 24202546.8
(22) Date of filing: 25.09.2024
(51) Int. Cl.: H04W 4/44, B60L 53/66, B67D 7/04, H04W 4/021, B67D 7/14

(54) **METHODS FOR COMMUNICATIONS BETWEEN REFUEL REQUESTORS AND FUEL PROVIDERS USING V2X FIELD**

(30) Priority: 06.12.2023 IN 202341083067
(71) Applicant: Harman International Industries, Incorporated, Stamford, CT 06901 (US)
(72) Inventor: BABU, Arepalli Ramesh, 521158 Movva Mandal (IN); KUNHI PARAMBATH, Jashitha, 673310 Mahe (IN); RASTOGI, Ayush, 250004 Meerut (IN); RAMESH, Rakesh, 600004 Chennai (IN)
(74) Representative: Kraus & Lederer PartGmbB

(57) **Abstract**

Systems and methods are herein provided for Vehicle-to-Everything (V2X) communications for establishing refueling sessions. A method for V2X communication comprises transmitting, via a communication system of a fuel provider, a refueling advertisement message to each of one or more nearby refuel requestors; receiving, via the communication system, a refueling initiation (RFI) message from each of one or more of the one or more nearby refuel requestors, wherein each RFI message comprises a refueling session request; using a scheduling algorithm to determine availability for the request of each RFI message; transmitting, via the communication system in response to determination of availability, a response message to each of one or more corresponding refuel requestors; when availability is confirmed for a respective refuel requestor, establishing a refueling session with the respective refuel requestor, and optionally, transmitting or receiving a refuel cancel message cancelling the established refueling session.

## Description

### FIELD

The disclosure relates to vehicle communications, and in particular, to Vehicle-to-Everything (V2X), cellular, and multi-access edge computing (MEC) communications.

### BACKGROUND

Vehicle-to-everything (V2X) systems are cooperative systems in which vehicles exchange information with other vehicles. V2X is a technology that enables communication and data exchange between vehicles and their surroundings, including other vehicles, infrastructure, pedestrians, and even the cloud, facilitating enhanced road safety, traffic efficiency, and personalized mobility experience. The V2X umbrella encompasses several technologies based on the communication channel that is leveraged: Vehicle-to-Vehicle (V2V) - vehicles communicating with one another, Vehicle-to-Infrastructure (V2I) - vehicles communicating with a road side infrastructure like a traffic light, Vehicle-to-Pedestrian (V2P) - vehicles communicating with mobile phones of pedestrians, Vehicle-to-Network (V2N) - vehicles communicating with an edge mobile network like Multi-access Edge Computing (MEC), etc. , V2X communication may be used to enhance driver safety with communication between nearby vehicles and dissemination of information to vehicles about a driving environment including vehicle traffic, pedestrian traffic, and the like. Further, messages may be transmitted between various entities.

Automotive infrastructure includes a network of fueling stations for vehicles of various fuel types. Fuel/battery capacity of a vehicle is a limiting factor for range of travel within the available network of refueling stations. However, refueling stations are not always utilized efficiently and suffer both from peak demands as well as lulls in usage. In some examples, grid capacity may be limited and load from charging a significant number of EVs at the same time may place strain on electrical grids. Current challenges for optimization of refueling include discovery of refueling stations, accessibility of refueling stations, for example in remote locations, utilization of the electrical grid for EV charging, and ensuring compatibility and standardization among different vehicle models, refueling equipment, and communication protocols. While V2X communication has been used to increase efficiency of refueling by broadcasting messages for reservation of spaces and checking compatibility of refueling stations, issues with interoperability, grid capacity, and access in remote locations remain.

### SUMMARY

In one or more embodiments, a method for Vehicle-to-Everything communication of a fuel provider comprises transmitting, via a communication system of a fuel provider, a refueling advertisement (RFA) message to each of one or more nearby refuel requestors. The fuel provider may receive, via the communication module, a refueling initiation (RFI) message from each of one or more of the one or more nearby refuel requestors, wherein each RFI message comprises a refueling session request. The fuel provider may determine availability for the refueling session request of each RFI message; and transmit, in response to determination of availability, a refueling response (RFR) message to each of one or more corresponding refuel requestors. If availability of the refueling session request is confirmed, the RFR message may confirm the request. If availability of the refueling session request is not confirmed, the RFR message may reject the request. The communication system of the fuel provider may transmit V2X messages to and receive V2X messages from a V2X system of refuel requestors. The fuel providers may be one of a service station that provides one or more of a fossil fuel (e.g., gasoline, diesel fuel, etc.) electric power, and hydrogen, a donor vehicle configured for peer-to-peer charging by providing DC electric power, and an at home charging station configured to provide electric power. A refuel requestor may be a vehicle powered by one or more of a fossil fuel, electric power, and hydrogen.

A complementary method for a refuel requestor comprises receiving, via a V2X system, an RFA message from each of one or more fuel providers when the one or more fuel providers are within a specified range of the refuel requestor. The refuel requestor may process each RFA message and determine compatibility of each of the one or more fuel providers. The refuel requestor may transmit a refuel initiation (RFI) message to a compatible fuel provider that comprises a refueling request. The refuel requestor may receive from the compatible fuel provider a refuel response (RFR) message that either confirms or rejects the refueling request. If confirmed, the refuel requestor may establish a refueling session with the compatible fuel provider.

Both the fuel provider and the refuel requestor may optionally transmit a refuel cancel (RFC) message in the event that they wish to cancel the established refueling session, for example in the event of grid overload, fuel shortage, change of plans, emergency situations, exigencies, and the like. The fuel provider may also transmit a refuel termination (RFT) message upon conclusion of the established refueling session.

V2X communication between the fuel provider and the refuel requestor may be performed in one of a plurality of modes. The plurality of modes may comprise automotive-to-automotive (A2A) mode, automotive-to-grid (A2G) mode, automotive-to-network-to-automotive (A2N2A) mode, and automotive-to-network-to-grid (A2N2G) mode depending on the type of fuel provider and whether the respective communication systems of the fuel provider and the refuel requestor are connected to a peer-to-peer or a network through which messages are sent and received.

In this way, refueling sessions for vehicles may be scheduled at convenient, nearby, compatible fuel providers in an efficient manner. The V2X communication herein may allow for establishment of refueling sessions at various fuel providers, including fuel providers like donor vehicles or at home charging stations which reduce load to the electrical grid and allow for refueling in remote regions. RFA messages sent by fuel providers may increase utilization of under-utilized resources, such as peer-to-peer charging and home-based charging stations. The V2X communication methods herein described allow for clear communication of fueling needs and what fuel providers can provide to refuel requestors, including both fuel types and time availability.

### BRIEF DESCRIPTION OF THE DRAWINGS

The disclosure may be better understood from reading the following description of non-limiting embodiments, with reference to the attached drawings, wherein below:
FIG. 1 shows an exemplary Vehicle-to-Everything (V2X) system, in accordance with one or more embodiments of the present disclosure;
FIG. 2 shows an example partial view of a vehicle cabin including an instrument panel, in accordance with one or more embodiments of the present disclosure;
FIG. 3 shows a block diagram of an example in-vehicle computing system of a vehicle configured to receive and generate V2X messages, in accordance with one or more embodiments of the present disclosure;
FIG. 4 shows a flowchart illustrating a method for V2X messaging of a refuel requestor;
FIG. 5 shows a flowchart illustrating a method for V2X messaging a fuel provider;
FIG. 6 shows a diagram illustrating a first V2X mode;
FIG. 7 shows a diagram illustrating a second V2X mode;
FIG. 8 shows a diagram illustrating a third V2X mode;
FIG. 9 shows a diagram illustrating a fourth V2X mode;
FIG. 10 shows a diagram illustrating a first V2X messaging scenario;
FIG. 11 shows a diagram illustrating a second V2X messaging scenario;
FIG. 12 shows a flowchart illustrating a method for scheduling refueling sessions; and
FIG. 13 shows a diagram illustrating a scheduling algorithm scenario.

### DETAILED DESCRIPTION

The following description relates to systems and methods for Vehicle-to-Everything (V2X) communication, and in particular, to systems and methods for establishing refueling sessions through V2X. Vehicle-to-everything (V2X) communication is the process of broadcasting messages between a vehicle and any V2X device that may affect or communicate with the vehicle. V2X communication also includes receiving messages at a vehicle from another vehicle or from a refueling station configured with a broadcasting system for the V2X communication. V2X communication allows for communication between the vehicle and other entities that may increase refueling efficiency, utilization of refueling infrastructure, including residential charging, under-utilized grid-connected charging points, and interoperability. V2X applications that are supported by a vehicle (e.g., a V2X communication system) provide a driver of the vehicle with one or more fueling providers, connect the fueling providers with one or more vehicles, and optimize a refueling process for more efficient utilization. Messages are sent between nearby fueling providers (e.g., fueling stations, peer-to-peer fueling providers) and refueling requestors (e.g., vehicles) to efficiently schedule refueling sessions. The messages may include information including fuel type, distance, and more in order for requestors and providers to efficiently evaluate viability and convenience of proposed refueling sessions.

V2X communication may rely on wireless connectivity between vehicles, mobile devices, and infrastructure entities such as Road-Side Unit (RSUs). Further, V2X communication may extend to wireless connectivity between vehicles and infrastructure such as fuel stations that include communication systems. The vehicles, infrastructure, and mobile devices used for V2X communication may be equipped with radio technologies, such as Dedicated Short Range Communication (DSRC) and/or Cellular V2X (CV2X) radio technologies, which may allow them to directly communicate with each other, such as via sidelink connections. Sidelink connections may have limited range, which may implicitly impact the nature of possible localization in the system. V2X messages, in various modes between various entities, may be broadcasted over sidelink connections, which may be received by various vehicles and/or service stations in a coverage area, and may be processed by each of the vehicles and/or service stations in implementing various V2X use cases.

A V2X application installed on a device, for example a computing device, may configure the device to send messages and receive messages transmitted automatically from one or more vehicles and/or service stations within a range of the device. The V2X application may be responsible for handling encoding and/or decoding of V2X standards-compliant messages and for implementing V2X networking standards and related protocols for transporting messages (e.g., over a DSRC radio and/or CV2X radio, for example, via a chip of the computing device). In addition, the V2X application may implement V2X security components which comply formats for security credentials such as certificates, and may implement protocols and/or algorithms for secure signing and verification of V2X messages. In particular, a message may be generated in accordance with one or more standards, such as SAE Surface Vehicle Standards J2735 and/or J3161, IEEE standards 1609.2 and 1609.3, or a relevant regional standard. The message may include information about a location of the vehicle or service station, such as a latitude, longitude, and elevation of the device. In some embodiments, the message may also include, for example, information about fuel type(s) needed or provided, fuel rate, and the like, as will be further discussed below.

Fuel station discovery is often solved by integrated navigation solutions such as map providers and applications sponsored by corporations. Online mapping services are able to provide searching for fuel stations based on driver-entered or GPS-determined location of a vehicle. However, additional information about fuel availability, fuel charges or vehicle queue status is not available with real-time information using online maps. Some online or mobile based applications allow for real-time updates, but they rely solely on user inputs and may not be reliable. As such, a driver may choose to attempt refueling at a station that does not provide a compatible fuel type or is busy with other vehicles.

Further, in the case of electric powered vehicles, uninterrupted electrical grid connectivity is demanded. In some cases, the electrical grid may be overloaded by a number of electric vehicles using the grid at the same time within the same region. Peer-to-peer charging may be utilized to reduce load on the grid, whereby a donor vehicle provides DC power to another vehicle, however accessibility and discovery of peer-to-peer configured vehicles, as well as at-home charging, is difficult. While vehicle data can be collected, stored, and analyzed, the vehicle data is currently not being used to increase utilization of various fuel providers in a predictive manner to increase accessibility to fuel providers and reduce load on the electrical grid

As noted, vehicles may attempt refueling with fuel providers that are not compatible. Ensuring compatibility and standardization among different vehicle types, refueling equipment, and communication protocols is challenging. Interoperability issues may arise when attempting to establish direct connections between vehicles of differing fuel types despite vehicle data and fuel provider data being available.

To address these problems, methods and systems are proposed for V2X communication between fuel providers and refuel requestors in order to optimize refueling efficiency, timeliness, and interoperability. For example, a vehicle may be traveling along a road within a threshold distance of a fuel provider, for example a service station that provides one or more types of fuel or a donor vehicle capable of peer-to-peer charging. The fuel provider may comprise a system that transmits a message to the traveling vehicle advertising their location and available fuel types. Additionally, the message may optionally include current refuel cost per unit and current refueling demand at the fuel provider. The vehicle may comprise a system that receives and processes the advertisement message, determines compatibility, and, if compatible, the vehicle may transmit a refuel initiation request to the fuel provider. If a time slot is available for the vehicle to refuel at the fuel provider, the refuel request may be confirmed between the vehicle and the fuel provider. In this way, fuel requestors (e.g., vehicles) and fuel providers may communicate with each other to establish refueling sessions when within a threshold distance of one another. With various types of fuel providers able to participate in V2X communication, a wider range of potential connections for refueling may be available, increasing access to refueling in remote locations and optimizing refueling along routes.

Further, in some embodiments, the system of the fuel provider may employ a scheduling algorithm to determine whether there is adequate availability for a refueling request. The scheduling algorithm may also determine whether requests that are currently scheduled are cancellable in order to open a slot for another request. In this way, refueling may be optimized for multiple refuel requestors at a particular fuel provider.

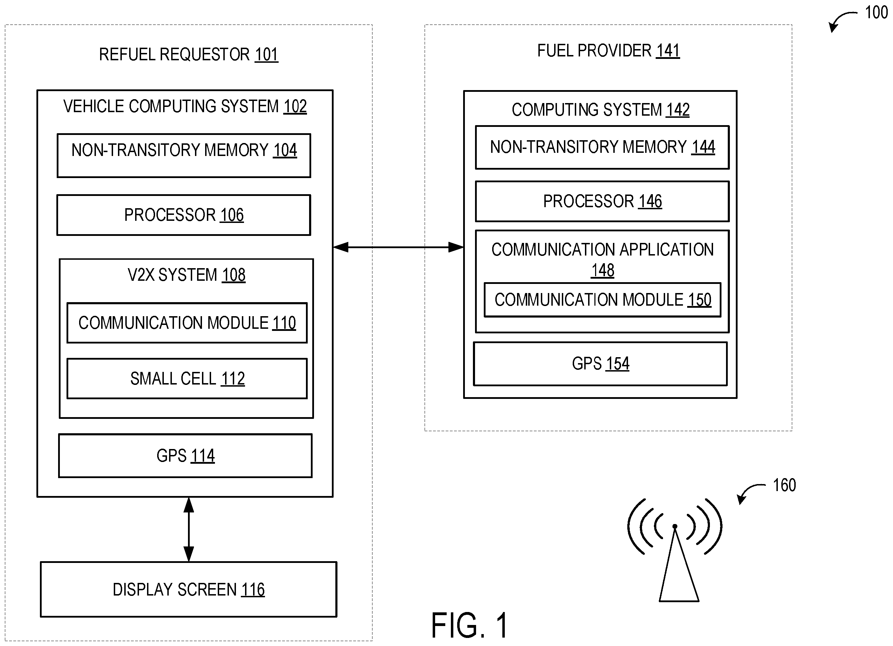

FIG. 1 shows a V2X ecosystem 100, including a vehicle computing system 102 of a refuel requestor 101 and a computing system 142 of a fuel provider 141. Messages may be transmitted between vehicle computing system 102 and computing system 142 of the fuel provider 141 using various modes of V2X communication, as will be further explained. Refuel requestor 101 may be a car, a bus, a truck, or a different type of machinery or vehicle operated by an operator. The refuel requestor 101 may be a fossil fuel (e.g., gasoline, diesel, etc.) powered vehicle with an internal combustion engine, a battery electric vehicle (BEV), a hybrid electric vehicle (BEV), a plug-in hybrid electric vehicle (PHEV), a biofuel vehicle, a natural gas vehicle, a hydrogen powered vehicle, or other type of vehicle. Refuel requestor 101 may also be a specialized vehicle used in a specific environment, such as, for example, a golf cart or transportation vehicle used in certain areas of a private facility such as an indoor facility. Refuel requestor 101 may be operated on public and/or private roads and highways, and in general, may be any type of vehicle operated by an operator. The fuel provider 141 may be another vehicle, for example for peer-to-peer charging where a donor vehicle provides battery charge to the refuel requestor 101, a fuel station, for example a fossil fuel station and/or a charging station, or other type of fuel provider or refueling station.

Vehicle computing system 102 includes one or more processors 106 configured to execute machine readable instructions stored in non-transitory memory 104. Similarly, computing system 142 of the fuel provider 141 includes one or more processors 146 configured to execute machine readable instructions stored in a non-transitory memory 144 of the computing system 142. Memory 104 and other memory referred to herein may include one or more data storage structures, such as optical memory devices, magnetic memory devices, or solid-state memory devices, for storing programs and routines executed by processor(s) 106 to carry out various functionalities disclosed herein. Memory 104 may include any desired type of volatile and/or non-volatile memory such as, for example, static random access memory (SRAM), dynamic random access memory (DRAM), flash memory, read-only memory (ROM), etc.

Processor(s) 106 and other processors referred to herein may be any suitable processor, processing unit, or microprocessor, for example. Processor(s) 106 may be a multi-processor system, and, thus, may include one or more additional processors that are identical or similar to each other and that are communicatively coupled via an interconnection bus. Processor(s) 106 may be single core or multi-core, and the programs executed thereon may be configured for parallel or distributed processing. In some embodiments, processor(s) 106 may optionally include individual components that are distributed throughout two or more devices, which may be remotely located and/or configured for coordinated processing. In some embodiments, one or more aspects of processor(s) 106 may be virtualized and executed by remotely-accessible networked computing devices configured in a cloud computing configuration.

Vehicle computing system 102 may include a V2X communication system 108, also referred to herein as V2X system 108, which may include a communication module 110 and a small cell 112. Vehicle computing system 102 may be configured to communicate with the computing system 142 via V2X communication using V2X system 108. For such purposes, V2X system 108 may include the communication module 110, which may manage wireless communication between vehicle computing system 102 and the computing system 142 and/or other communication modules of other vehicles, RSUs, and/or mobile devices configured to communicate via V2X communication. Similarly, computing system 142 may be configured to communicate with vehicle computing system 102 via a communication application 148. Communication application 148 includes a communication module 150, which may manage wireless communication between the computing system 142 and vehicle computing system 102 and/or other communication modules of other vehicles, RSUs, and/or mobile devices configured to communicate via V2X communication in one or more modes. The one or more modes may include automotive-to-automotive (A2A) and automotive-to-grid (A2G), as well as modes that include a network, such as automotive-to-network-to-automotive (A2N2A) and automotive-to-network-to-grid (A2N2G). As an example, communication module 150 may transmit a message from the fuel provider 141 to communication module 110, which may communicate information of the message, including location of the fuel provider 141, fuel type(s) offered, and more to vehicle computing system 102. A2A mode may encourage peer-to-peer charging, resulting in efficient resource utilization, flexibility, convenience, and community collaboration. A2A communication allows individuals to share excess fuel or charging capacity with others, thereby optimizing utilization of existing resources and expanding network of charging points.

As another example, the communication module 110 may also transmit a message to the communication module 150, including for example a refueling initiation request. Messages that may be transmitted from a fuel provider to a refuel requestor include a refueling advertisement (RFA) when the refuel requestor is nearby (e.g., within a specified range) the fuel provider, a refueling response (RFR) in response to an initiation request from the refuel requestor, a refuel termination (RFT) following conclusion of a refueling session, and a refuel cancel (RFC) for any exigencies, for example in the event of grid overload, fuel shortage, change of plans, emergency situations, and the like. Messages that may be transmitted from the refuel requestor to the fuel provider may include a refuel initiation (RFI), an RFT, and an RFC. The various message types will be expanded upon further below.

Communication modules 110 and 150 may support wireless communication between computing system 142 and vehicle computing system 102. The wireless communication may rely on one or more of various wireless technologies (e.g., radio frequency, infrared, near field communication (NFC), etc.). For example, a wireless connection may be established via a radio frequency (RF) link that supports bidirectional communication, whereby RF signals may be transmitted from communication module 150 and received at communication module 110, and/or RF signals may be transmitted by communication module 110 and received at communication module 150. In various examples, communication module 150 may communicate with communication module 110 (and vice-versa) via radio technologies such as Dedicated Short Range Communication (DSRC) and/or cellular V2X (CV2X) communications, (e.g., sidelink connections via PC5 interface/LTE). Communication module 150 may communicate via a wireless local area network (LAN) or wide area network (WAN) using any past, present, or future communication protocol (e.g., BLUETOOTH^{™}, USB 2.0, USB 3.0, etc.). In some examples, communication module 110 may communicate with communication module 150 of communication application 148 of the computing system 142 via a wireless network 160, as is described by modes A2N2G and A2N2A. In various embodiments, wireless network 160 may be or include the Internet.

Small cell 112 may provide occupants of refuel requestor 101 increased coverage for cellular data. For example, small cell 112 may include SIM card of a Telematics Control Unit (TCU) of a vehicle used for enhanced 911 services. In various embodiments, small cell 112 may be a femtocell included in vehicle 101, which may have greater coverage with less signal loss.

Vehicle computing system 102 may further include a global positioning system (GPS) 114. For example, GPS 114 may be included in a navigational guidance system of vehicle 101. GPS 114 may be used by vehicle computing system 102 to determine a location of vehicle 101 as vehicle 101 moves along a route. A first location of vehicle 101 may be compared to a second location of fuel provider 141 based on GPS or user-inputted data. Computing system 142 may include a GPS 154. GPS 154 may indicate the second location of the fuel provider 141, for comparison with the first location. Determination of one or more nearby entities, refuel requestors or fuel providers may be done using their advertised location through the GPS module.

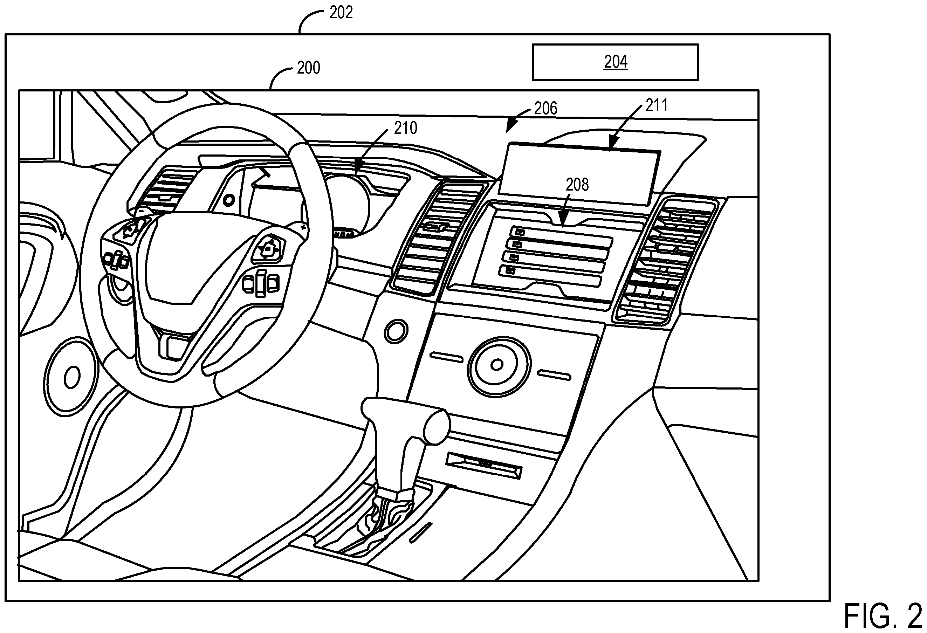

FIG. 2 shows an example partial view of an interior of a cabin 200 of a vehicle 202, in which a driver and/or one or more passengers may be seated. Vehicle 202 may be a non-limiting example of the refuel requestor 101 shown by FIG. 1 and described above.

Vehicle 202 of FIG. 2 may be a motor vehicle including drive wheels (not shown) and a power source 204 configured to provide torque to the drive wheels, such as an internal combustion engine and/or battery. In examples in which the power source 204 includes an internal combustion engine, the internal combustion engine may include one or more combustion chambers which may receive intake air via an intake passage and exhaust combustion gases via an exhaust passage. Vehicle 202 may be a road automobile, among other types of vehicles. In some examples, vehicle 202 may include a hybrid propulsion system including an energy conversion device operable to absorb energy from vehicle motion and/or the engine and convert the absorbed energy to an energy form suitable for storage by an energy storage device. Vehicle 202 may be a fully electric vehicle in some examples, incorporating fuel cells, solar energy capturing elements, and/or other energy storage systems for powering the vehicle.

As shown, the vehicle 202 may include an instrument panel 206 with various displays and controls accessible to a human driver (also referred to as the user and/or occupant) of vehicle 202. For example, instrument panel 206 may include a touch screen 208 of an in-vehicle computing system (e.g., vehicle computing system 102 of FIG. 1) and an instrument cluster 210. Touch screen 208 may receive user input to the in-vehicle computing system for controlling visual display output, user preferences, control parameter selection, and so on. While the example system shown in FIG. 2 includes controls that may be performed via a user interface of the in-vehicle computing system, such as touch screen 208, without a separate control panel, in other embodiments, the vehicle may include additional control panels. In some embodiments, one or more hardware elements of in-vehicle computing system 209, such as touch screen 208, a display screen 211 (e.g. display screen 116), various control dials, knobs and buttons, memory, processor(s), and any interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

During operation of vehicle 202, the in-vehicle computing system may be configured to receive electronic signals from the various sensors of the vehicle 202, in some examples. Additionally, the in-vehicle computing system may be configured to generate and transmit one or more messages, as V2X communications, in accordance with SAE Surface Vehicle Standard J2735 and/or other related/supported standards of a particular region of vehicle 202, as described above. The message may be transmitted to fuel providers, such as other vehicles or infrastructure entities such as gas/charging stations, in an environment of vehicle 202. The in-vehicle computing system may be configured to receive messages from fuel providers in the environment. If one or more messages from one or more fuel providers are received, the in-vehicle computing system may process the messages to determine fuel type compatibility, distance compatibility, and more. If a fuel provider is deemed compatible, the in-vehicle computing system may send a response message initiating a refuel request to the compatible fuel provider. In some examples, a notification that a compatible fuel provider has been identified may be displayed on the display screen 211 and the refuel request message may be sent in response to user input, e.g., input to the display screen 211.

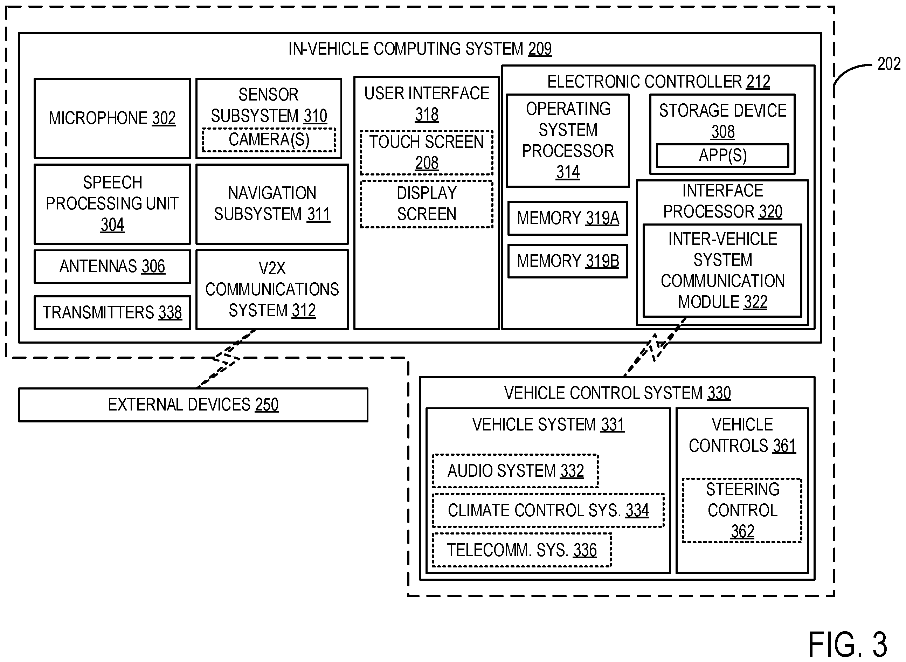

FIG. 3 shows a block diagram of an in-vehicle computing system 209 integrated inside vehicle 202, where in-vehicle computing system 209 may be a non-limiting example of vehicle computing system 102 of vehicle 101 of FIG. 1. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, subsystems, hardware components, as well as software applications and systems that are integrated in, or integratable into, vehicle 202.

In-vehicle computing system 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may interface with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 209 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 204 (shown by FIG. 2) of the vehicle, and so on. In addition, other interfacing means such as Ethernet may be used as well without departing from the scope of this disclosure.

A storage device 308 may be included in in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices, such as non-volatile storage device 308 and/or non-volatile memory 319B (e.g., non-transitory memory), may store instructions and/or code that, when executed by a processor (e.g., operating system processor 314 and/or interface processor 320), controls in-vehicle computing system 209 to perform one or more of the actions described in the disclosure.

A microphone 302 may be included in in-vehicle computing system 209 to receive voice commands from a user, to measure ambient noise in the vehicle, and so on. A speech processing unit 304 may process voice commands, such as the voice commands received from microphone 302. In some embodiments, in-vehicle computing system 209 may also be able to receive voice commands and sample ambient vehicle noise using a microphone included in an audio system 332 of the vehicle.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

A V2X communications system 312 of in-vehicle computing system 209 may be coupleable to and/or communicate with one or more external devices 250 located external to vehicle 202. V2X communications system 312 may be the same as or similar to V2X system 108 of vehicle computing system 102 of FIG. 1. The V2X communications system is in electronic communication with the electronic controller 212 of the vehicle 202 and may be commanded by the electronic controller 212 to generate and transmit V2X communications, similar to the examples described above. As one example, the electronic controller 212 may command the V2X communications system 312 to generate and transmit one or more messages to one or more external devices 250. The external devices 250 may include other vehicles, fuel providers (e.g., donor vehicles, refuel stations, etc.), RSUs arranged along roadways, and so on. The V2X communications system 312 may communicate wirelessly with the external devices 250 via a communication module, such as communication module 110 of FIG. 1.

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 361 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 209 may further include one or more antennas 306. The in-vehicle computing system may obtain broadband wireless internet access via antennas 306, and may further receive broadcast signals such as radio, television, weather, traffic, and the like. In some examples, one or more antennas may be included with the V2X communications system 312 and may be configured to receive V2X communications from vehicles external to the vehicle 202, from RSUs, and/or from fuel providers (e.g., service stations, donor vehicles, etc.). In-vehicle computing system 209 may receive positioning signals such as GPS signals via antennas 306. The in-vehicle computing system may also receive wireless commands via radio frequency (RF) such as via antennas 306 or via infrared or other means through appropriate receiving devices. In some embodiments, antenna 306 may be included as part of audio system 332 or telecommunication system 336. Additionally, antenna 306 may provide AM/FM radio signals to external devices 250, in some examples.

The vehicle 202 further includes one or more transmitters 338. In some examples, one or more of the transmitters 338 may be integrated together with one or more of the antennas 306 to form one or more transceivers configured to generate and transmit V2X communications, and receive and process V2X communications, through V2X communications system 312.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318, vehicle settings selected by in-vehicle control system 330 may be displayed to a user on user interface 318. Notifications and other messages (e.g., received messages), as well as navigational assistance, may be displayed to the user on a display of the user interface. User preferences/information and/or responses to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

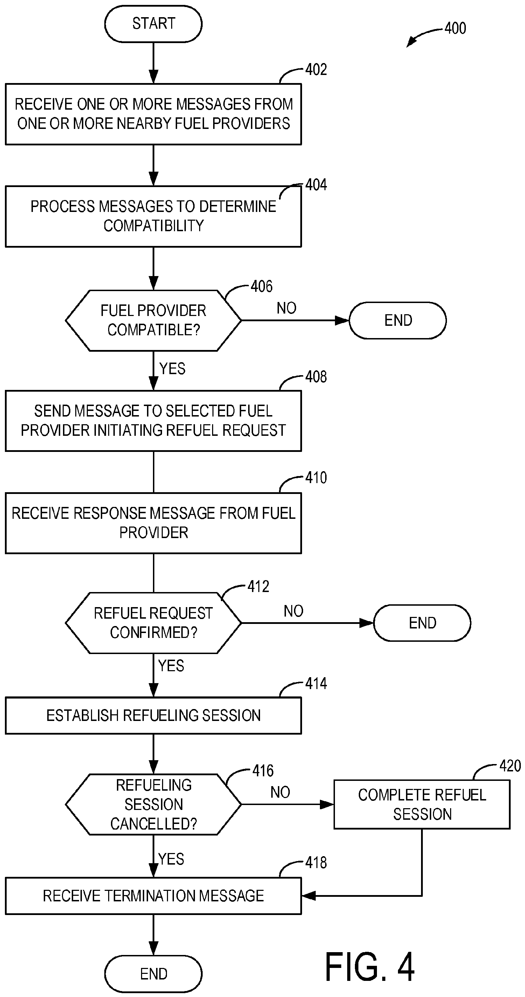

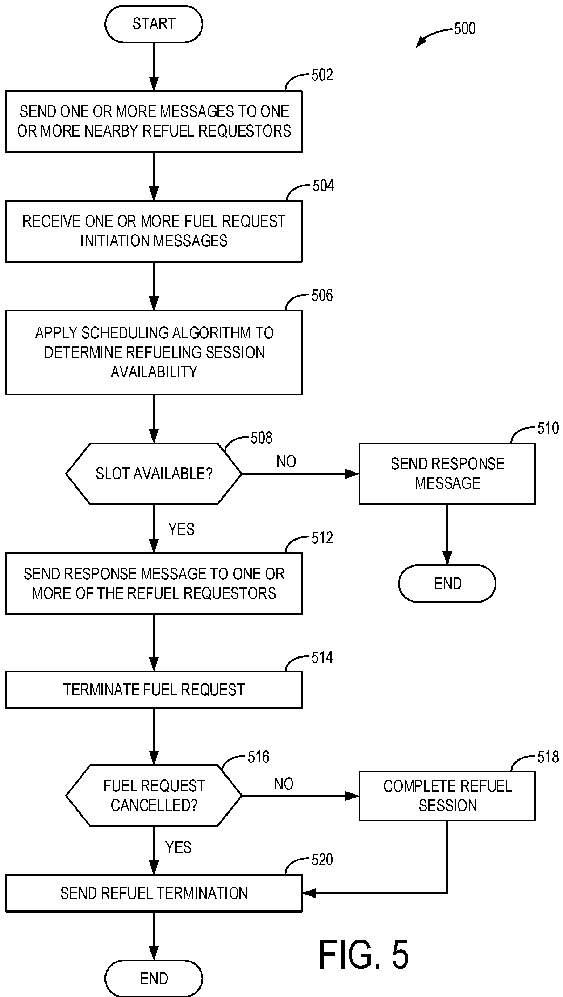

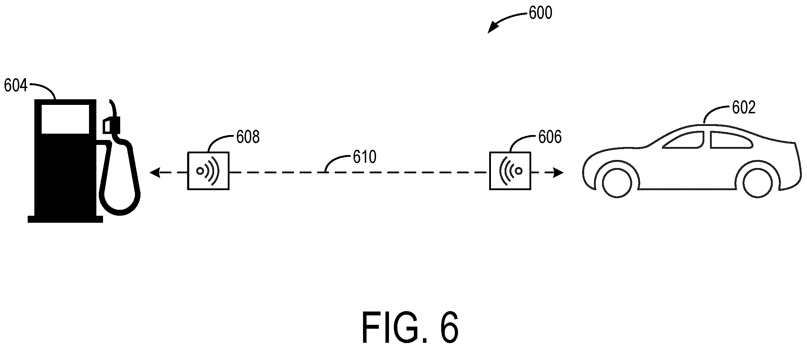

FIGS. 4 and 5 show two complementary methods for V2X communications between refuel requestors and nearby fuel providers. The refuel requestors may be vehicles and may be similar to, or the same as, the refuel requestor 101 described above with reference to FIG. 1, and/or the vehicle 202 described above with reference to FIGS. 2 and 3. The fuel providers may be donor vehicles, service stations, or home-charging stations, and may be similar to, or the same as, the fuel provider 141 described above with respect to FIG. 1. The V2X communications may be in one of various modes, as will be further described with respect to FIGS. 6-9. Briefly, for example, the V2X communication between the fuel provider and the refuel requestor may be A2A, A2G A2N2A, or A2N2G. Specifically, when the fuel provider is a donor vehicle, V2X communication may operate in A2A or A2N2A mode and when the fuel provider is a service station or home charging point, V2X communication may operate in A2G or A2N2G mode. FIG. 4 specifically shows a method for V2X communication of a refuel requestor and FIG. 5 specifically shows a method for V2X communication of a fuel provider, though it should be understood that the methods may be taken together to form a single scenario, in some examples.

Referring now to FIG. 4, a flowchart illustrating a first method 400 for V2X communication of a refuel requestor. The first method 400 may be executed by a V2X system, for example V2X system 108 of vehicle computing system 102, based on instructions stored in memory, such as non-transitory memory 104. The refuel requestor as herein described may be a vehicle of a particular fuel type, such as fossil fuel powered, BEV, HEV, PHEV, hydrogen, etc. The fuel type may be known to the V2X system. The V2X system may also be in communication with and/or include a location system, such as a GPS system, to determine a current location of the refuel requestor at a point in time.

At 402, method 400 includes receiving one or more messages from one or more nearby fuel providers. The V2X system of the refuel requestor may communicate with one or more other V2X systems within a specified range. For example, the V2X system of the refuel requestor may receive messages from communication systems capable of V2X messaging, such as fuel providers, within a specified threshold distance of the refuel requestor. The one or more messages received by the V2X system of the refuel requestor may be RFA (refuel advertisement) messages. Each RFA message may contain information including but not limited to sender identification, location of fuel provider, fuel type(s) available, number of available stations, fueling rate (e.g., rate in liters per minute, gallons per hour, kilowatthour (kWh) per minute, etc.), price (e.g., dollars per gallon, rupees per liter, euros per kWh, etc.), accepted payment methods, additional services offered, operating hours, distance between fuel provider and refueling requestor, and home charging availability. Home charging availability may indicate whether home-based charging is available at the fuel provider location. For example, for a fueling station (e.g., a gasoline/petroleum station), home charging may not be available, however for a home-based charging point for BEV, PHEV, etc., home charging may be available.

At 404, method 400 includes processing the received messages to determine compatibility. The refuel requestor may have a known fuel type, as mentioned. Further, in some examples, the refuel requestor may have a known destination or route that it is taking, along with an itinerary/timeline of when to reach said destination. The V2X system of the refuel requestor may process each of the received messages based on several factors to determine whether one or more of the messages is received from a compatible fuel provider. These factors may include but are not limited to fuel type, distance from refuel requestor, resulting detour from route, price, refueling rate, and service type. As an example, one or more messages may be received from fuel providers that do not provide a fuel type that matches the fuel type demanded by the refuel requestor while one or more other messages may be received from fuel providers that do provide the matching fuel type(s). The fuel providers that do not provide the matching fuel type may be ruled incompatible and the fuel providers that do may continue to be processed for one or more other factors, including distance from the refuel requestor, convenience, etc.

At 406, method 400 determines whether a compatible fuel provider of the one or more fuel provides from whom messages were received is identified. If no compatible fuel provider is identified among the fuel providers from which messages were received, no further action is taken by the V2X system and method 400 ends. If a compatible fuel provider is identified, method 400 proceeds to 408. In some examples, a notification may be presented to a driver of the refuel requestor, for example on a display screen, notifying the driver of the identified fuel provider. In some examples, more than one compatible fuel provider may be identified, at which point a notification may be presented to the driver of the refuel requestor via the display screen displaying each option.

At 408, method 400 includes sending a message to a selected fuel provider initiating a refuel request. In some examples, the message may be sent to the selected fuel provider in response to user input. For example, the notification indicating that one or more compatible fuel providers have been identified may be displayed to the user via the display screen and the driver may indicate, for example via a touch, which fuel provider is selected and whether a refuel request is to be sent to the fuel provider. In some examples, the driver may opt to not send a refuel request to an identified compatible fuel provider based on personal preferences, time constraints, or other reason. In such examples, method 400 may end without sending the refuel request message.

The refuel initiation (RFI) message may comprise a plurality of information that is to be processed by the selected fuel provider. For example, the RFI message may include a vehicle identification number (VIN), a vehicle type (e.g., BEV, HEV, PHEV, etc.), vehicle fuel type (e.g., fossil fuel, electricity, hydrogen, etc.), fuel and/or battery capacity, state of charge (SOC) for BEV, PHEV, etc. or current fuel level for fossil fuel powered, HEV, etc., requested fuel amount (e.g., in gallons, liters, etc.), and preferred start time and duration.

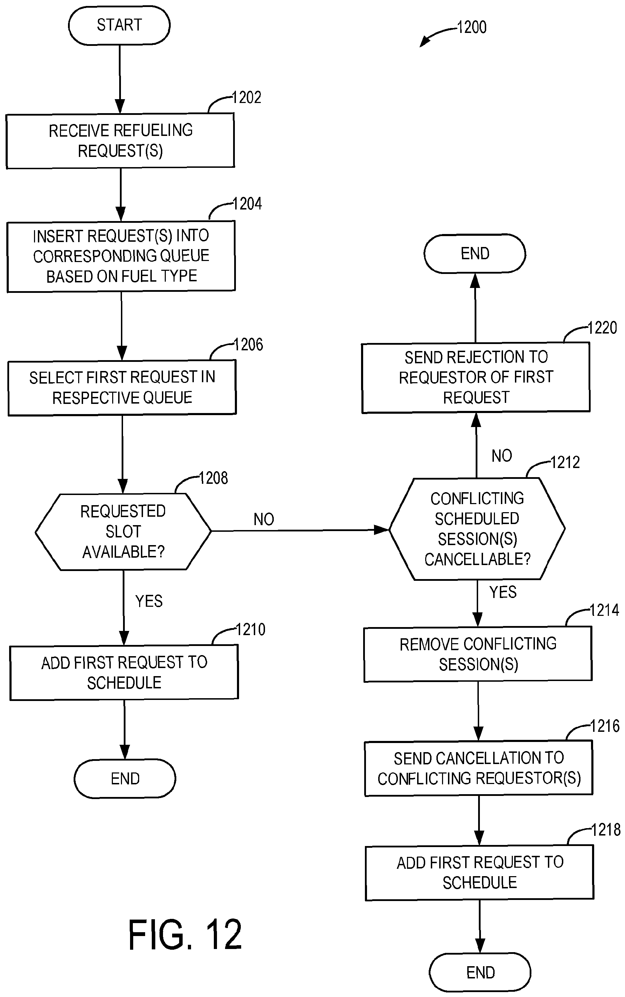

At 410, method 400 includes receiving a refuel response (RFR) message from the fuel provider. The RFR message may either confirm or reject the refuel request sent via the RFI message from the refuel requestor. If the selected fuel provider confirms the request (e.g., has an available time slot for the refuel requestor, as will be further explained with respect to FIGS. 5 and 12), the refuel request may be confirmed and a refuel response (RFR) message from the selected fuel provider may be received by the refuel requestor. The RFR message may comprise information including a station identifier, location, availability status (e.g., requested time available or unavailable), fueling rate, fueling session details including start time and end time, total fuel to be dispensed, and applicable charges. If the selected fuel provider rejects the request (e.g., does not have an available time slot), the RFR message rejecting the request will be received by the refuel requestor noting as such.

At 412, method 400 determines whether a confirmation of the refuel request has been received. The RFR response received may include an availability status. If the status is available and a session timeline is provided, the request may be confirmed. If the status is unavailable and no timeline is provided, the request may be rejected. If the request is confirmed, method 400 proceeds to 414. If the request is not confirmed (e.g., rejected), method 400 ends.

At 414, method 400 includes establishing a refueling session. Establishing a refueling session may include accepting a proposed time for the refueling session. Establishing the refueling session may confirm that both the refuel requestor and the fuel provider acknowledge the acceptance of the refuel request.

At 416, method 400 includes determining whether the scheduled refueling session is cancelled. In some examples, one or both the refuel requestor and fuel provider may cancel the refueling session prior to conclusion. In such examples, an RFC (refuel cancel) message may be transmitted from the refuel requestor to the fuel provider, in the case that the refuel requestor is cancelling, or received by the refuel requestor from the fuel provider, in the case that the fuel provider is cancelling. As an example, the refuel requestor may determine that it no longer demands refueling or the selected fuel provider is no longer compatible, due to for example a change in route or circumstance. The refuel requestor may also transmit the RFC in response to driver input, for example because of personal preference or an alternative fueling option becoming available. The refuel requestor may receive the RFC from the fuel provider in instances in which the fuel provider is unable to fulfill the scheduled refueling session or in instances when a second refuel request from a different refuel requestor replaces the scheduled refueling session.

In some examples, if the refueling session is canceled by either party, method 400 proceeds to 418, where an RFT (refuel termination) message is sent from the refuel requestor to the fuel provider and/or received by the refuel requestor from the fuel provider. The RFT may indicate to both parties that the refueling session has been terminated. In other examples, the RFC message may be a last communication between the parties. If the refuel request is not canceled by either party, method 400 proceeds to 420, where the refuel requestor concludes the refueling request by proceeding with the scheduled refueling session. Following conclusion of the refueling session, method 400 may proceed to 418, where an RFT message is received from the fuel provider indicating that the session has concluded.

RFA messages may allow for increased utilization of under-utilized resources, such as home-based charging stations and grid-connected infrastructure. By including these resources as fuel providers capable of sending RFA messages, vehicles are informed about their availability and offerings, leading to increased utilization thereof. Home-based charging points, with their excess capacity during off-peak hours for the electrical grid, can be efficiently utilized by EVs, which may help to balance load on the electrical grid and maximize use of residential charging infrastructure. Additionally, RFA messages may allow drivers to access under-utilized grid-connected charging points in commercial areas or parking lots, reducing congestion at traditional service stations and increasing utilization of these alternative options. Further, by providing information about fuel type, fueling rate, and additional services, RFA messages may allow vehicles/drivers to make informed decisions, optimizing their refueling plans and enhancing the utilization of diverse refueling resources.

FIG. 5 shows a flowchart illustrating a second method 500 for V2X communication of a fuel provider. The second method 500 may be executed by a communication system, for example communication application 148 of computing system 142 of fuel provider 141, based on instructions stored in memory, such as non-transitory memory 144. The fuel provider as herein described may be a service station, a home charging station, or a donor vehicle that provides at least one type of fuel. In some examples, the fuel provider may provide more than one type of fuel, for example both fossil fuel and electricity for BEV/PHEV charging. The fuel type(s) may be known to the computing system. The computing system may also be in communication with and/or include a location system, such as a GPS system (e.g., GPS 154), to determine a current location of the fuel provider at a point in time. In some examples, as is for service stations, the location of the fuel provider may not change. In other examples, as is for donor vehicles configured for peer-to-peer charging, the location of the fuel provider may change over time as the donor vehicle moves.

At 502, method 500 includes sending one or more messages to one or more nearby refuel requestors. The communication system of the fuel provider may send RFA messages to each of the one or more nearby refuel requestors when the refuel requestors are within a specified distance (e.g., within range of communication of the system as based on radio, NFC, etc. configurations). As previously described, each RFA message may comprise a plurality of information about the fuel provider, including but not limited to sender identification, location of the fuel provider, fuel type(s) available, number of stations (e.g., number of fuel pumps, charging ports, etc.), fueling rate, price per volume for a given timeframe, accepted payment methods, additional services offered, distance between a given refuel requestor and the fuel provider (based on a detected location of the refuel requestor), and home charging availability. Each RFA may be specific to the refuel requestor to which it is sent.

At 504, method 500 includes receiving one or more fuel request initiation messages. For each refuel requestor that selects the fuel provider to send a refuel request to, an RFI may be received by the fuel provider. Each RFI message may include, as previously described, a VIN number, a vehicle type, a vehicle fuel interface type, fuel capacity, SOC or fuel tank fill status, type of fuel interaction requested, requested fuel amount, and preferred timeframe.

At 506, method 500 includes applying a scheduling algorithm to determine refueling session availability. As an example, the fuel provider may have a finite number of stations (e.g., pumps and/or charge ports) and each refueling session that is scheduled may take a specified amount of time to complete. The scheduling algorithm, as will be further described with respect to FIGS. 12-13, may determine whether slots are available for each of the refuel requestors from which RFI messages were received.

At 508, for each given refuel requestor from which an RFI message was received, the method 500 includes determining if a slot is available for a refueling session. Based on the scheduling algorithm, determination of available slots, or ability to create available slots, may be determined. If a slot is available for a given refuel requestor, method 500 proceeds to 512. If a slot is not available for a given refuel requestor, method 500 proceeds to 510. At 510, method 500 includes sending a response (RFR) message to the given refuel requestor indicating that a refueling session cannot be scheduled. The RFR message may include an availability status that indicates to the refuel requestor that the requested slot is unavailable and thus the corresponding request is rejected. The method 500 then ends.

At 512, method 500 includes sending a response (RFR) message to one or more of the refuel requestors. The RFR message may include an availability status included therein that indicates to the one or more of the refuel requestors that respective requested slots are available. The one or more of the refuel requestors may be the refuel requestors for which slots are available for refueling sessions, as determined at 508. The RFR message may comprise information including a station identifier, location, availability status, fueling rate, fueling session details including start time, end time, total fuel to be dispensed, and applicable charges.

At 514, method 500 includes establishing a refueling session. Establishing a refueling session may include receiving acceptance of a proposed time for the refueling session from each given refueling requestor. Establishing the refueling session may confirm that both the given refuel requestor and the fuel provider acknowledge the acceptance of the refuel request.

At 516, method 500 includes determining whether the refueling session has been cancelled. As is described with respect to FIG. 4, either a given refuel requestor or the fuel provider may cancel the refueling session. In such examples, an RFC (refuel cancel) message may be transmitted from the fuel provider to the refuel requestor, in the case that the fuel provider is cancelling, or received by the fuel provider from the refuel requestor, in the case that the refuel requestor is cancelling. As an example, the refuel requestor may determine that it no longer demand refueling or the selected fuel provider is no longer compatible, due to for example change in route or circumstance. The fuel provider may cancel the session in the event of grid overload, fuel shortage, emergency situations, exigencies, and the like. The refuel requestor may also transmit the RFC in response to driver input, for example because of personal preference or an alternative fueling option becoming available. The fuel provider may transmit the RFC to the refuel requestor in instances in which the fuel provider is unable to fulfill the scheduled refueling session or in instances when a second refuel request from a different refuel requestor replaces the scheduled refueling session.

In some examples, if the refueling session is canceled by either party, method 500 proceeds to 520, where an RFT (refuel termination) message is sent or received by the fuel provider. The RFT may indicate to both parties that the refueling session has been terminated. In other examples, the RFC message may be a last message between the parties. If the refuel request is not canceled by either party, method 500 proceeds to 518, where the fuel provider concludes the refueling request by proceeding with the scheduled refueling session. Following conclusion of the refueling session, the method 500 may proceed to 520, where an RFT message is sent from the fuel provider to the refuel requestor indicating that the session has concluded.

The request and response methods herein provided allows for clear communication between fuel providers and refuel requestors. The fuel providers and refuel requestors may accurately provide and receive information about fueling needs, availability, and provided services/fuel types, thereby reducing chance of a refuel requestor seeking refueling at an incompatible or unavailable fuel provider. Therefore, the refueling process may be more precise, efficient, and customer-oriented. Further, cancelling refueling processes through RFC messages may improve peak-load management and reduce electrical grid failures.

Further, the request and response methods herein provided in FIGS. 4 and 5 may do more than increase refueling ease and efficiency, including increasing processing efficiency of the computing systems of both the refuel requestor and the fuel provider because refueling sessions are scheduled only a portion of the time. For example, an RFA message may be received by a refuel requestor that is not in need of refueling, at which point communication between the fuel provider and the refuel requestor does not continue, thereby avoiding extraneous messaging. Similarly, following determination and communication of unavailability for a requested slot, communication between the refueling requestor and the fuel provider does not continue, thereby avoiding extraneous messaging. As only the necessary communication is sent and received, processing and computational demands may be optimized. Increase in efficiency of establishing refueling sessions as herein described may be due not only to faster communication, but also as a result of the V2X method of communication, which allows for communication between vehicles and a plurality of fuel providers as well as increasing refueling management and accessibility. In this way, the approach provides for improved operation and efficient communication beyond the benefits of simply using digital communication in a conventional way.

Additionally, because fuel providers and refuel requestors are configured for V2X messaging in a plurality of modes, messages may be sent and received from several types of entities at the same time. Because of this, increased utilization of resources may be achieved as vehicles may receive RFA messages from a larger variety of types of fuel providers, including fuel providers configured for peer-to-peer charging, traditional service stations, at home charging points, and the like. Vehicles may therefore have increased exposure to under-utilized fuel providers as a result of the V2X communication methods herein described.

FIGS. 6-9 show various V2X communication modes in which a fuel provider communicates with a refuel requestor via V2X communication. It should be appreciated that FIGS. 6-9 are for illustrative purposes and may not be drawn to scale.

Referring now to FIG. 6, a first diagram 600 illustrating a first V2X communication mode is shown. In the example shown, a vehicle 602 is within a range 610 (e.g., within 300-400m for DSRC or 800-1000m for CV2X) of a service station 604. The service station 604 may be an example of a fuel provider and the vehicle 602 may be an example of a refuel requestor. The vehicle 602 may comprise a V2X communication system 606 that transmits and receives message signals from a V2X communication system 608 of the service station 604. The service station 604 may provide one or more fuel types (e.g., fossil fuel, electricity, hydrogen) and the vehicle 602 may be powered by a specific fuel type that the service station 604 may or may not provide. A V2X communication may be created between the V2X communication system 606 of the vehicle 602 and the V2X communication system 608 of the fuel provider. The V2X communication may comprise one or more messages, including an RFA message, an RFI message, and RFR message, and the like as previously described with respect to FIGS. 4-5.

The first diagram 600 may illustrate an A2G mode of V2X communication, whereby the vehicle 602 is connected with fuel infrastructure (e.g., the grid), which includes the service station 604. The A2G mode may use direct cellular V2X/direct short range communications (DSRC), as previously noted.

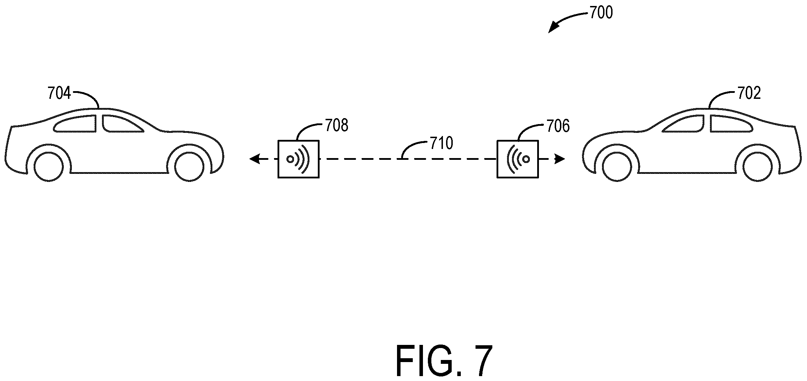

Referring to FIG. 7, a second diagram 700 illustrating a second V2X communication mode is shown. In the example shown, a first vehicle 702 is within a range 710 of a second vehicle 704. The first vehicle 702 may be an example of a fuel requestor and the second vehicle 704 may be an example of a fuel provider (e.g., a donor vehicle). The first vehicle 702 may comprise a first V2X communication system 706 and the second vehicle 704 may comprise a second V2X communication system 708. The first and second communication systems 706, 708 may communicate with one another via a plurality of message types when the first vehicle 702 is within the range 710 of the second vehicle 704. The second vehicle 704 may be configured to provide fuel (e.g., electric power) via DC charging and the first vehicle 702 may be powered by a fuel type. In some examples, the V2X communications between the first and second vehicles 702, 704 may allow for determination of compatibility between the first and second vehicles 702, 704 in terms of fuel type, interface types (e.g., DC vs AC chargers, charger types, etc.), and the like.

The second diagram 700 may illustrate an A2A mode of V2X communication, whereby the first and second vehicles 702, 704 are connected to one another. The A2A mode may use direct V2X messaging channels between the vehicles to advertise, initiate requests, and response to each other without need for a central decision agent. While two vehicles are shown in the second diagram 700, A2A V2X communication may include communication between multiple sets of vehicles. For example, the first vehicle 702 may be connected via V2X to a third vehicle and/or a fourth vehicle while the second vehicle 704 may be connected via V2X to the third and/or a fifth vehicle. In some examples, vehicles that are donor vehicles may be configured as fuel providers as well as refuel requestors. For example, the third vehicle may be a donor vehicle fuel provider that transmits RFA messages to both the first and second vehicles 702, 704 and the second vehicle 704 transmits RFA messages to the first vehicle 702 and to the fifth vehicle.

With the inclusion of A2A mode for the V2X communication between refuel requestors and fuel providers as herein described, utilization of peer-to-peer charging and home charging stations may be increased. By allowing refuel requestors to communicate with both infrastructure (e.g., via A2G or A2N2G modes) and other vehicles (e.g., via A2A or A2N2A modes), more resource types and stations may be viewed as options for refueling by refuel requestors, thereby decreasing load on the electrical grid by increasing utilization of under-utilized resources.

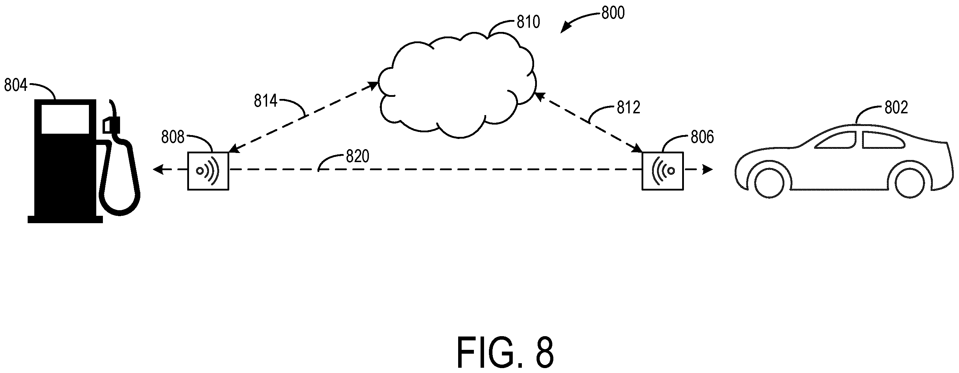

Referring now to FIG. 8, a third diagram 800 illustrating a third V2X communication mode is shown. In the example shown, a vehicle 802 is within a range 820 of a service station 804. The service station 804 may be an example of a fuel provider and the vehicle 802 may be an example of a refuel requestor. The vehicle 802 may comprise a V2X communication system 806 that transmits and receives message signals from a V2X communication system 808 of the service station 804. Specifically, the V2X communication system 806 of the vehicle 802 may send and receive messages 812 from a network 810 and the V2X communication system 808 of the service station 804 may send and receive messages 814 from the network 810. A V2X communication may be created between the V2X communication system 806 of the vehicle 802 and the V2X communication system 808 of the fuel provider by the network 810. For example, communication messages may be transmitted via Multi Access Edge Computing (MEC). The MEC may also run a scheduling algorithm for the fuel provider in such examples at the Edge or at the infrastructure itself. The third mode as such may be A2N2G whereby a vehicle communicates with fuel infrastructure via a network.

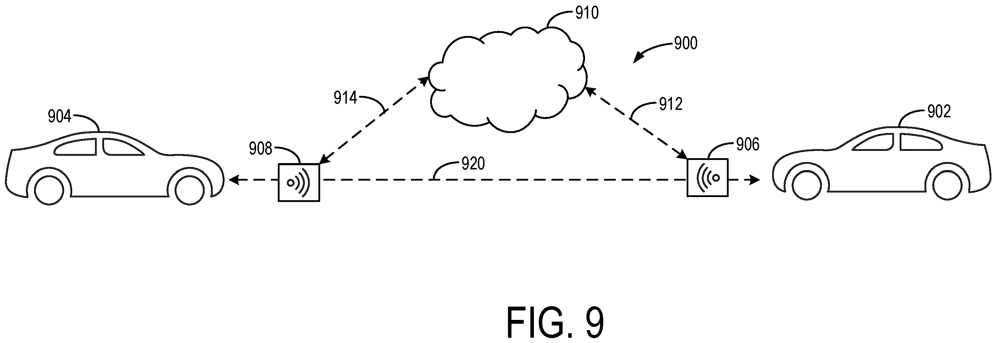

Referring to FIG. 9, a fourth diagram 900 illustrating a fourth V2X communication mode is shown. In the example shown, a first vehicle 902 is within a range 920 of a second vehicle 904. The first vehicle 902 may be an example of a fuel requestor and the second vehicle 904 may be an example of a fuel provider (e.g., a donor vehicle). The first vehicle 902 may comprise a first V2X communication system 906 and the second vehicle 904 may comprise a second V2X communication system 908. The first and second communication systems 906, 908 may communicate with one another via a plurality of message types when the first vehicle 902 is within the range 920 of the second vehicle 904 via a network 910. For example, the first vehicle 902 may send and receive messages 912 from the network 910 and the second vehicle 904 may send and receive messages 914 from the network 910. Similar to the second V2X communication mode, the second vehicle 904 may be configured to provide fuel (e.g., electric power) via DC charging and the first vehicle 902 may be powered by a fuel type. In some examples, the V2X communications between the first and second vehicles 902, 904 may allow for determination of compatibility between the first and second vehicles 902, 904. Similar to the third V2X mode, the communication messages may be transmitted via MEC. The MEC may also run a scheduling algorithm for the fuel provider in such examples at the Edge or at the infrastructure itself. The fourth mode of V2X communication may be A2N2A, where vehicles communicate with each other via a network. Similar to as described with respect to the second mode, more than two vehicles may communicate via V2X in the A2N2A mode.

In some examples, A2N2A and A2N2G modes of V2X communication as herein presented may increase a range of communication between refuel requestors and fuel providers. In this way, refuel requestors may receive RFA messages from a larger number of fuel providers and/or fuel providers that are further from a current location, which may in turn increase utilization of under-utilized fuel providers, such as home charging stations, remotely located refueling stations, and/or donor vehicles configured for peer-to-peer charging.

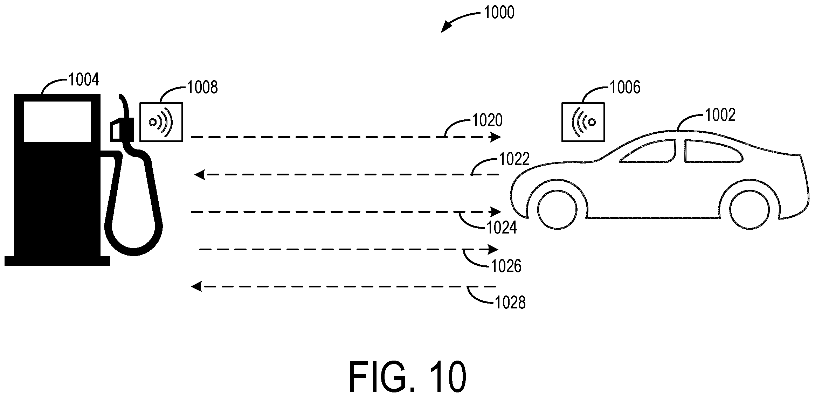

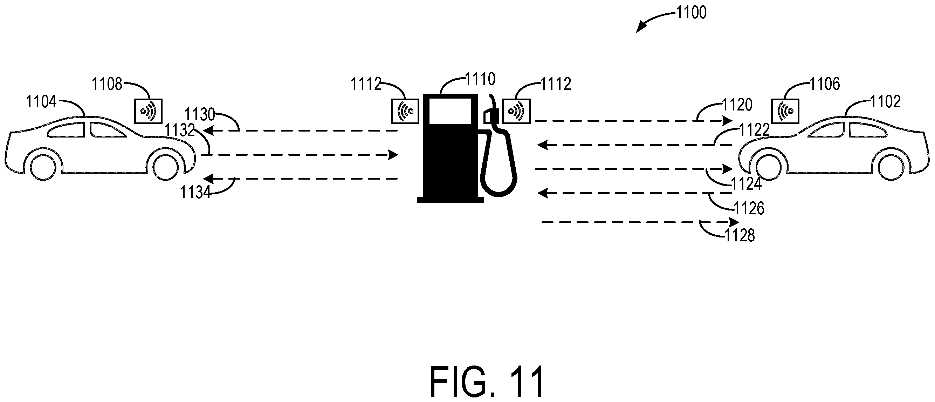

Turning now to FIGS. 10 and 11, scenarios for refueling V2X communication messages are shown. Specifically, FIG. 10 shows a first refueling communication scenario between a refuel requestor and a fuel provider, where the fuel provider is a service station, and FIG. 11 shows a second refueling communication scenario between a multiple refuel requestors and a fuel provider, where the fuel provider is a service station.

Referring to FIG. 10, a first scenario 1000 is depicted in a diagram. In the first scenario, a vehicle 1002 is a refuel requestor and a service station 1004 is a fuel provider. The vehicle 1002 may comprise a computing system with a V2X communication system 1006. The service station 1004 may comprise a computing system with a communication system 1008. The V2X communication system 1006 and the communication system 1008 may transmit messages therebetween in one of a plurality of modes, for example the first or third modes presented above. Communication between the vehicle 1002 and the service station 1004 may comprise a plurality of messages, as is described with respect to FIGS. 4 and 5 above.

For example, a first message 1020 sent from the service station 1004 to the vehicle 1002 may be an RFA message that includes information about the service station, including fuel types available, location and distance from the vehicle 1002, etc. A second message 1022 may be an RFI message. In response to the first message 1020, the second message 1022 may be sent from the vehicle 1002 to the service station 1004 initiating a refueling request. The second message 1022 may be transmitted in response to determination by the computing system of the vehicle 1002 that the service station 1004 is compatible. A third message 1024 may be an RFR message. The third message 1024 may be transmitted from the service station 1004 to the vehicle 1002 in response to determination by the service station 1004 that a slot is available for the refuel request from the vehicle 1002. A fourth message 1026 may be an RFC message. The fourth message 1026 may be transmitted from the service station 1004 to the vehicle 1002 to notify the vehicle 1002 that a scheduled refueling session has been canceled. The fourth message 1026, in some examples, may comprise information detailing a reason or cancellation. A fifth message 1028 may be a RFT message. The fifth message 1028 may be transmitted from the vehicle 1002 to the service station 1004 as an acknowledgment of the fourth message 1026.

The first scenario 1000 herein presented details a communication between a vehicle and a service station whereby an initial advertisement is sent out by the service station, the vehicle receives the advertisement and determines that the service station is compatible with the vehicle. The vehicle initiates a request, which is accepted and then later canceled by the service station, for which messages thereof are sent to the vehicle. In another similar scenario between a vehicle and a service station, a session may be scheduled following the RFR message and the session may then take place without a cancellation.

Referring to FIG. 11, a second scenario 1100 is depicted in a diagram. In the second scenario 1100, a first vehicle 1102 is a first refuel requestor, a second vehicle 1104 is a second fuel requestor, and a service station 1110 is a fuel provider. The first vehicle 1102 may comprise a computing system with a V2X communication system 1106. The second vehicle 1104 may comprise a computing system with a V2X communication system 1108. The service station 1110 may comprise a computing system with a communication system 1112. The V2X communication system 1106 and the communication system 1112 may transmit messages therebetween in one of a plurality of modes, for example the first or third modes presented above. The V2X communication system 1108 and the communication system 1112 may transmit similar messages therebetween in one of a plurality of modes. As such, the service station 1110 may communicate with both the first vehicle 1102 and the second vehicle 1104. In some examples, the service station 1110 may communicate with both vehicles at the same time, for example wherein the service station 1110 sends out RFA messages to both the first and second vehicles at the same time. Alternatively, the service station 1110 may communicate with one of the vehicles first. Communication between the first and second vehicles and the service station 1110 may comprise a plurality of messages, as is described with respect to FIGS. 4 and 5 above.

For examples, with regard to messages sent between the first vehicle 1102 and the service station 1110, a first message 1120, which may be an RFA message, may be sent from the service station 1110 to the first vehicle 1102 when the first vehicle 1102 is within range of the service station 1110. The first message 1120 may be processed by the first vehicle 1102 and, in response to determination that the service station 1110 is a compatible fuel provider, a second message 1122, which may be an RFI message, may be sent from the first vehicle 1102 to the service station 1110 initiating a refuel request. The second message 1122 may be processed through a scheduling algorithm by the service station 1110, in some examples, and in response to determination that a slot is available for the refuel request of the first vehicle 1102, a third message 1124, which may be an RFR message, may be sent from the service station 1110 to the first vehicle 1102 confirming/accepting the refuel request and scheduling a refueling session. Following conclusion of the refueling session, a fourth message 1126, which may be an RFT message, may be sent from the first vehicle 1102 to the service station 1110 indicating that the session has concluded. A fifth message 1128 may be sent from the service station 1110 to the first vehicle 1102 acknowledging the termination message.

With regard to messages sent between the second vehicle 1104 and the service station 1110, at the same time as or at a different time from when the first message 1120 is sent, a sixth message 1130, which may be an RFA message, may be sent from the service station 1110 to the second vehicle 1104 when the second vehicle 1104 is within range of the service station 1110. The sixth message 1130 may be processed by the second vehicle 1104 and, in response to determination that the service station 1110 is a compatible fuel provider, a seventh message 1132, which may be an RFI message, may be sent from the second vehicle 1104 to the service station 1110 initiating a fuel request. The seventh message 1132 may be processed through a scheduling algorithm by the service station 1110, in some examples, and in response to determination that a slot is not available for the refuel request of the second vehicle 1104, an eighth message 1134 may be sent from the service station 1110 to the second vehicle 1104 rejecting the refuel request. The eighth message 1134 may be an RFR message that includes an availability status set to unavailable.

The scenario presented in FIG. 11 demonstrates the increased processing efficiency provided by the systems and method herein. For example, messages between the second vehicle 1104 and the fuel provider 1110 end following the eighth message 1134 that indicates rejection of the refuel request. As such, unnecessary messages between the second vehicle 1104 and the fuel provider 1110 may be mitigated, thereby increasing processing efficiency of the computing systems of the second vehicle 1104 and the fuel provider 1110.

It should be understood that the above described scenarios are presented merely as examples and are not meant to be exhaustive. Other scenarios are possible, including those of a variety of modes of V2X communication, with a varying number of parties (e.g., one or more fuel providers and one or more refuel requestors), and with differing messaging scenarios, as is presented in the methods of FIGS. 4 and 5.

An exemplary scheduling algorithm that may be employed by individual fuel providers and/or networks connected to fuel providers is presented in FIGS. 12-13. In FIG. 12, a flowchart illustrating a method 1200 is shown for employing a scheduling algorithm for determination of slot availability for refuel requests. The method 1200 may be executed by a processor of a computing system of the fuel provider, for example processor 146 of fuel provider 141, based on instructions stored in memory, such as non-transitory memory 144, in some examples. In other examples, such as for A2N2G and A2N2A modes of V2X communication, a MEC may run the scheduling algorithm at an edge.

At 1202, method 1200 includes receiving one or more refueling requests. The refueling requests may be received by the fuel provider at the same time or at different times. Refueling requests may be transmitted as RFI messages from refuel requestors in response to an RFA message transmitted from the fuel provider to the refuel requestors. Each of the RFI messages may contain information regarding type of fuel requested, fuel capacity, SOC/tank fill status, requested fuel amount, and preferred start time and duration. For example, the fuel provider may receive a first RFI from a first refuel requestor that is a BEV, demands electricity, and needs a full charge of its battery. The fuel provider may also receive a second RFI from a second refuel requestor that is a gasoline powered vehicle and needs 7 gallons of gasoline.

At 1204, method 1200 includes inserting the one or more refuel requests into corresponding queues based on fuel type. For example, the fuel provider may have one or more pumps for fossil fuel powered vehicles and one or more charge ports for electricity powered vehicles (e.g., BEV, PHEV, etc.). In some examples, each respective pump/port may have an independent queue. In other examples, each fuel type, regardless of number of pumps/ports thereof, may have a single queue. In the above presented example, the first refuel request may be placed into a first queue for electric charging and the second refuel request may be placed into a second queue for fossil fuel refueling. In some examples, requests may already be present in a respective queue when the one or more refuel requests are inserted. The requests may be placed into the queue in order of when they were received by the fuel provider.

At 1206, method 1200 includes selecting a first request in a respective queue. The first request of the respective queue may be the oldest request in the queue (e.g., the request that has been in the queue the longest).

At 1208, method 1200 includes determining whether a requested slot is available for the selected first request. As noted above, each RFI may include a requested timeframe for a start time for a refueling session. Determining whether the requested slot is available may include processing the SOC/tank fill status, fuel capacity, requested refueling amount, and preferred start time to determine an estimated refueling session duration and whether there is a slot of time for the corresponding fuel type at the fuel provider to accommodate the session for the first request. For example, the scheduling algorithm may compute, for each pump/port, an earliest open slot for allocating the selected first request based on current allocations in the schedule for the respective pump/port. Fuel capacity at the allocation time may be determined and compared with the requested fuel amount. If the requested fuel amount is lesser than the capacity, then the allocation may be confirmed and the requested slot may be determined to be available. Schedules of each of the available pumps/ports for the corresponding fuel type may be checked individually for available slots. If the requested slot is available (YES at 1208), method 1200 proceeds to 1210. If the requested slot is not available (NO at 1208), method 1200 proceeds to 1212.

At 1210, method 1200 includes adding the selected first request to the schedule. The available slot that was found for the selected first request may be specific to one schedule for the corresponding fuel type. For example, each respective pump/port available at the fuel provider may have independent schedules. Adding the first request to the schedule may trigger the communication system of the fuel provider to send an RFR message to the refuel requestor corresponding to the selected first request indicating that the selected first request has been accepted. The RFR message may comprise the time, duration, and pump/port number for the scheduled session. The method 1200 then ends.

Returning to if the requested slot is not available, at 1212, method 1200 includes determining whether conflicting scheduled session(s) are cancellable. The conflicting scheduled sessions may be those that at least partially overlap with a preferred slot for the selected first request. In some examples, one or more of the schedules checked when determining whether the requested slot is available may have scheduled sessions that are cancellable for one or more reasons. The one or more reasons may include differences in quality of service (QoS), for example if the QoS of the first requestor is higher than that of a conflicting scheduled session, and differences in cost per fuel unit, for example if cost per fuel unit for the first requestor is higher than that of the conflicting scheduled session. If the conflicting scheduled session(s) are cancellable (YES at 1212), method 1200 proceeds to 1214. If the conflicting scheduled session(s) are not cancellable (NO at 1212), method 1200 proceeds to 1220.

At 1220, method 1200 includes sending a rejection message to the refuel requestor of the selected first request. The rejection message may indicate to the refuel requestor that its refuel request has not been accepted and a refueling session is not being scheduled. The method 1200 then ends.

At 1214, if the conflicting scheduled session(s) are cancellable, method 1200 includes removing the conflicting scheduled session(s) from the schedule. Removing the conflicting session(s) from the schedule may open up slots for the selected first request to be placed into.

At 1216, method 1200 includes sending a cancellation to the conflicting requestor(s). For example, for each cancelled scheduled session, an RFC message may be sent from the fuel provider to the refuel requestors corresponding to the cancelled scheduled sessions. The RFC message may include sender and session identification and a reason for cancellation.

At 1218, method 1200 includes adding the selected first request to the schedule. The available slot that was found for the selected first request may be specific to one schedule for the corresponding fuel type. For example, each respective pump/port available at the fuel provider may have independent schedules. Adding the first request to the schedule may trigger the communication system of the fuel provider to send an RFR message to the refuel requestor corresponding to the selected first request indicating that the selected first request has been accepted. The RFR message may comprise the time, duration, and pump/port number for the scheduled session. The method 1200 then ends.

The scheduling algorithm as herein presented may increase processing efficiency of the computing system of the fuel provider. As availability of requested slots is determined for each individual requestor, inefficient scheduling may be mitigated, for example by avoiding scheduling overlapping sessions that later demand cancelling. Further, early determination of unavailability may reduce possibility of refuel requestors arriving at a fuel requestor that does not have availability for them, thereby increasing refueling efficiency for vehicles. The scheduling algorithm may be executed by the computing system of the fuel provider and results thereof may inform messages sent by the fuel provider to the corresponding refuel requestor and the information included therein, including availability status, session times, and the like. In this way, the V2X communication methods herein described, informed by the scheduling algorithm in the instance of RFR messages, may increase efficiency of communication by including all relevant information in each message. The messages, as noted previously, may be configured as a particular message standard, such as SAE Surface Vehicle Standards J2735 and/or J3161, IEEE standards 1609.2 and 1609.3, or a relevant regional standard, and are therefore able to be processed by the computing system of the refuel requestor and/or the fuel provider to extract the relevant information for analysis, scheduling, and decision making purposes.

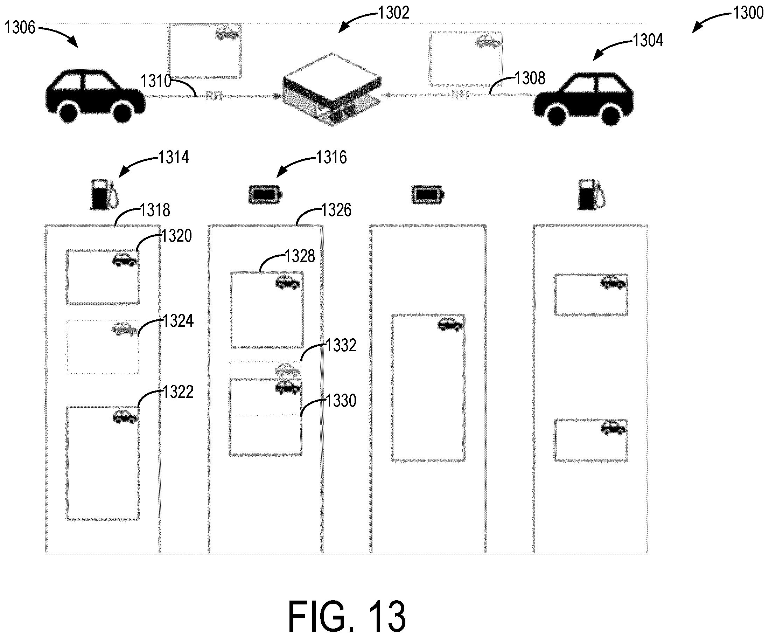

Turning now to FIG. 13, a diagram 1300 of a refueling scenario as may be processed through a scheduling algorithm, for example the method 1200 described above, is shown. The diagram 1300 includes a fuel provider 1302, a first vehicle 1304, and a second vehicle 1306. The fuel provider 1302 may be a service station equipped to provide both fossil fuel and electricity at different pumps/ports, in some examples. The first vehicle may be a BEV, PHEV, or other type of vehicle that demands electricity as fuel. The second vehicle 1306 may be an at least partially fossil fuel powered vehicle with an internal combustion engine that demands fossil fuels as fuel. The fuel provider 1302 may comprise one or more fossil fuel pumps and one or more electricity ports, for example pump 1314 and electricity port 1316. Each of the different pumps and/or ports may be considered independently by the scheduling algorithm, in some examples.

In the refueling scenario as presented, the first vehicle 1304 has sent a first RFI 1308 message to the fuel provider 1302 and the second vehicle 1306 has sent a second RFI 1310 message to the fuel provider 1302. The first and second RFI messages 1308, 1310 may comprise information of a respective vehicle's fuel capacity (e.g., battery capacity or fuel tank capacity), requested fuel amount, SOC/tank fill status, and the like, as previously described. From this, the scheduling algorithm may determine an estimated duration of a refueling session for each of the vehicles.

Each of the different pumps and/or ports may have a respective schedule therefor. For example, the pump 1314 may have a first schedule 1318 and the electricity port 1316 may have a second schedule 1326. The first schedule 1318 may contain existing scheduled sessions, such as scheduled session 1320 and scheduled session 1322. Similarly, the second schedule 1326 may contain existing scheduled sessions, such as scheduled session 1328 and scheduled session 1330. Each of the scheduled sessions may have a duration, start time, and end time which defines a slot thereof in the respective schedule. The scheduling algorithm may use the defined slots for the scheduled sessions, along with other information such as provider capacities, to determine whether new requests and requested slots thereof are available.

For example, the first RFI 1308 may have a requested slot 1332 with a start time between the end time of the scheduled session 1328 and the start time of the scheduled session 1330. However, the requested end time of the first RFI 11308 may be before the end time of the scheduled session 1330. Therefore, the scheduled session 1330 may conflict with the requested slot of the first RFI 1308 and the requested slot 1332 may not be available. Therefore, the first RFI 1308 may not be accepted unless the conflicting scheduled session 1330 is able to be canceled to make space for the requested slot 1332. The second RFI 1310, in contrast, may have a requested slot 1324 with a start time after the end time of the scheduled session 1320 and an end time before the start time of the scheduled session 1322. The requested slot 1324 may therefore be deemed available by the scheduling algorithm and the second RFI 1310 may be accepted.

It should be appreciated that the above presented scheduling algorithm and use case scenario therefore are exemplary in nature. Other scheduling algorithms may be used to determine scheduling of refueling sessions without departing from the scope of this disclosure.

Thus, as described herein, various methods are disclosed for V2X communication between fuel providers and refuel requestors. The V2X communication includes various modes, including A2A, A2G, A2N2A, and A2N2G, which allows for communication between vehicles and a plurality of types of fuel providers, including donor vehicles, home charging stations, and fuel infrastructure service stations. Inclusion of peer-to-peer charging and home-charging may encourage sharing and community collaboration, which in turn may increase accessibility of refueling in remote locations. Further, the V2X communication methods as herein presented increase utilization of such under-utilized resources such as peer-to-peer charging and home charging as messages may be received from and sent to multiple types of fuel providers based on the various modes. Different message types allow for the refuel requests and the fuel providers to determine compatibility and availability of sessions, allowing both parties make informed decisions to increase efficiency and utilization. The methods and systems herein which may increase utilization of resources, balance on electrical grids, and increase use of under-utilized grid-connected charging points as well as residential charging points. Further, both the fuel provider and the refuel requestor may cancel a scheduled session, which may increase convenience for the refuel requestor and may allow for peak-load management for infrastructure and the grid.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," and so on. are used merely as labels, and are not intended to impose numerical requirements or a particular positional order on their objects. The following claims particularly point out subject matter from the above disclosure that is regarded as novel and non-obvious.

## Claims

1. A method for Vehicle-to-Everything, V2X, communication, comprising:
transmitting, via a communication system of a fuel provider, a refueling advertisement (RFA) message to each of one or more nearby refuel requestors;
receiving, via the communication system, a refueling initiation, RFI, message from each of one or more of the one or more nearby refuel requestors, wherein each RFI message comprises a refueling session request;
determining availability for the refueling session request of each RFI message;
transmitting, via the communication system in response to determination of availability, a refueling response, RFR, message to each of one or more corresponding refuel requestors; and
when availability is confirmed for a respective refuel requestor, establishing a refueling session with the respective refuel requestor.

2. The method of claim 1, wherein the fuel provider is one of a service station, an at home charging station, and a donor vehicle.

3. The method of claim 1 or 2, wherein each of the one or more nearby refuel requestors is one of a battery electric vehicle, BEV, a hybrid electric vehicle, HEV, a plug-in hybrid electric vehicle, PHEV, a hydrogen powered vehicle, and a fossil fuel powered vehicle.

4. The method of any preceding claim, wherein the fuel provider provides one or more fuel types and the one or more of the one or more nearby refuel requestors from which each RFI message is received are powered by one of the one or more fuel types.

5. The method of any preceding claim, wherein, when the refueling session request is unavailable, the RFR message rejects of the refueling session request.

6. The method of any preceding claim, wherein determining availability for each refueling session request comprises applying a scheduling algorithm configured to process each RFI message to determine if a corresponding requested slot is available in a respective schedule of the fuel provider.

7. The method of any preceding claim, further comprising transmitting, a refuel termination, RFT, message to each of the one or more corresponding refuel requestors indicating that each respective refueling sessions have concluded.

8. A system, comprising:
a fuel provider comprising a first computing system that comprises a first communication system; and
a refuel requestor comprising a second computing system that comprises a second communication system, wherein the first and second computing systems are configured to transmit and receive Vehicle-to-Everything, V2X, communications therebetween for scheduling a refueling session in one or more of a plurality of modes when the fuel provider and the refuel requestor are within a range of each other.

9. The system of claim 8, wherein the fuel provider is configured to transmit V2X communications to the refuel requestor including refueling advertisement messages, RFAs, refueling response messages, RFRs, refueling cancel messages, RFCs, and refuel termination messages, RFTs.

10. The system of claim 8 or 9, wherein the refuel requestor is configured to transmit V2X communications to the fuel provider including refueling initiations, RFIs, and refueling cancels, RFCs.

11. The system of any of claims 8 to 10, wherein the plurality of modes comprise an automotive-to-automotive, A2A, mode, an automotive-to-grid, A2G, mode, an automotive-to-network-to-automotive A2N2A) mode, and an automotive-to-network-to-grid A2N2G, mode.

12. The system of claim 11, wherein the system operates in one of A2A mode and A2N2A mode when the fuel provider is a donor vehicle configured to provide electric power and in one of A2G mode and A2N2G mode when the fuel provider is one of a service station and an at home charging station.

13. The system of claim 11 or 12, wherein the V2X communications for scheduling the refueling session are transmitted via multi-access edge computing (MEC).
